# EUROPÄISCHE PATENTSCHRIFT

(11) **EP 2 400 189 B1**
(45) Veröffentlichungstag und Bekanntmachung des Hinweises auf die Patenterteilung: **02.04.2014**
(21) Anmeldenummer: 10006622.4
(22) Anmeldetag: 25.06.2010
(51) Int. Cl.: F16J 15/32

(54) **Radialwellendichtring, Verwendung eines Radialwellendichtrings, und Verfahren zur Herstellung eines Radialwellendichtrings**
Rotary shaft lip seal, use of same and method of producing same
Joint d'étanchéité d'arbre, utilisation d'un tel joint et son procédé de fabrication

(43) Veröffentlichungstag der Anmeldung: 28.12.2011
(73) Patentinhaber: Dichtungstechnik G. Bruss GmbH & Co. KG, 22955 Hoisdorf (DE)
(72) Erfinder: Schmitt, Wolfgang, 68519 Viernheim (DE)
(74) Vertreter: Müller Verweyen

(56) Entgegenhaltungen:
- EP-A1- 1 561 773
- EP-A1- 1 992 849
- FR-A- 1 447 749
- FR-A5- 2 173 571

## Beschreibung

Die Erfindung betrifft einen Radialwellendichtring zur Abdichtung eines Gehäuseteils eines Kraftfahrzeugmotors oder -getriebes mit einem Stützkörper und einer mit dem Stützkörper verbundenen, zur abzudichtenden Seite hin gebogenen Manschetten-Dichtlippe, die im eingebauten Zustand auf einer axialen Länge L auf der Welle aufliegt und im Kontaktbereich mit der Welle einen Rückförderkanal zum Rückfördern von Medium in den abzudichtenden Raum aufweist und die eine ausreichende Biegeelastizität aufweist, um im eingebauten Zustand ohne zusätzliche Hilfsmittel einen für die Dichtwirkung ausreichenden Anpressdruck zu erzielen. Die Erfindung betrifft weiterhin eine Verwendung eines Radialwellendichtrings und ein Verfahren zur Herstellung eines Radialwellendichtrings.

Radialwellendichtringe für Kraftfahrzeuge mit einer derartigen Manschetten-Dichtlippe aus PTFE sind seit langem bekannt, siehe H.-K. Müller, "Abdichtung bewegter Maschinenteile", Medienverlag U. Müller 1990. Seit einiger Zeit sind auch derartige Manschetten-Dichtlippen aus Elastomer bekannt, siehe DE 100 33 446 C2. Aufgrund permanenten Kostendrucks besteht eine ständige Anforderung, die Kosten von Radialwellendichtringen für Kraftfahrzeuge weiter zu senken.

FR 1 447 749 offenbart einen Radialwellendichtring, dessen beispielsweise aus einem Methyl-Vinyl-Silikonkautschuk (MVQ) bestehende Dichtlippe mit einer Ringwendelfeder belastet und daher nicht gattungsgemäß ist.

EP 1 561 773 A1 betrifft einen Radialwellendichtring mit einer Dichtlippe aus einem in einer thermoplastischen Matrix dispergierten Elastomer.

EP 1 992 849 A1 und FR 2 173 571 offenbaren weitere Radialwellendichtringe.

Der Erfindung liegt die Aufgabe zugrunde, unter Beibehaltung der Vorzüge der Manschetten-Dichtlippe und Aufrechterhaltung der vollen Dichtungsfunktionalität einen kostengünstigen Radialwellendichtring, eine Verwendung und ein Verfahren zu dessen Herstellung bereitzustellen.

Die Erfindung löst die Aufgabe mit den Merkmalen der unabhängigen Ansprüche. Hochtemperaturvernetzte Silikonelastomere sind wärmebeständige und im gesamten Anwendungsbereich, d.h. auch bei hohen Motortemperaturen, elastische Materialien, die preislich günstiger sind als die herkömmlichen eingesetzten Elastomere. Silikonkautschuk bzw. -elastomer ist zwar als Dichtungswerkstoff grundsätzlich bekannt. Allerdings weisen Silikonwerkstoffe eine sehr starke Volumenquellung gegenüber diversen Lösungsmitteln, Treibstoffen und Ölen auf. In Verbrennungsmotoren wird eine starke Quellung insbesondere durch Kraftstoffeinträge in den Ölraum verursacht, beispielsweise durch Ottokraftstoff-Kondensat, Diesel oder RME bzw. FAME insbesondere in der Regenerierphase eines Dieselkats. Bei alkoholhaltigen Kraftstoffen können im Ölraum erhebliche Alkoholmengen durch Kondensation im Kurzstreckenbetrieb insbesondere bei tiefen Außentemperaturen entstehen, wenn der Motor nicht warm wird und der aus dem Blow-by-Gas stammende, im Ölraum kondensierte Alkohol nicht ausdampft. Aus diesen Gründen wurde Silikonelastomer für eine erfindungsgegenständliche Manschettendichtlippe, die auf einer axialen Länge L auf der Welle aufliegt und im Kontaktbereich mit der Welle einen Rückförderkanal zum Rückfördern von Medium in den abzudichtenden Raum aufweist, bisher nicht in Betracht gezogen, weil bei dieser Bauart bei Volumenquellung des Silikonmaterials ein Aufwölben und Abheben des Dichtabschnitts von der Welle, und damit einhergehend ein Verlust der Dichtfunktionalität und der Funktionalität des Rückförderkanals, unvermeidbar erscheint. Überraschenderweise hat sich jedoch gezeigt, dass es möglich ist, bei einer solchen Manschettendichtlippe aus einem Silikonmaterial eine ausreichende Anpressung und Dicht- sowie Rückförderwirkung trotz starker Volumenquellung zu erzielen.

Erfindungsgemäß handelt es sich bei dem Silikonmaterial um ein Flüssigsilikon-Material, auch LSR bzw. Liquid Silicone Rubber genannt. Flüssigsilikon ist ein heißvulkanisierender Silikonkautschuk, der bei der Verarbeitung eine wesentlich niedrigere Viskosität aufweist als Festsilikone oder gewöhnliche Elastomere, weshalb Flüssigsilikon vorteilhafterweise durch Spritzgießen verarbeitet werden kann. Die Zeitdauer für die Vulkanisation von Flüssigsilikon liegt dabei erheblich unter der von gewöhnlichen Elastomeren. Es lassen sich daher erheblich reduzierte Zykluszeiten in der Herstellung erreichen. Generell kommen fluorierte und nicht-fluorierte Silikonmaterialien in Frage.

Vorzugsweise ist das Flüssigsilikon-Material additionsvernetzt, d.h. durch einen Vernetzungsmechanismus polymerisiert, der auf einer Addition von Si-H-Gruppen an siliziumgebundene Vinylgruppen beruht, die vorzugsweise durch Edelmetallzusätze, insbesondere Platin, katalysiert ist. Im Gegensatz zu der herkömmlichen peroxidischen Vernetzung werden dabei keine Spaltprodukte frei, was beim Spritzgießen vorteilhaft ist, da Ablagerungen bzw. Beläge auf den Werkzeugen vermieden werden können. Jedoch ist die Erfindung nicht auf Additionsvernetzung beschränkt. Insbesondere kommt auch Peroxidvernetzung in Frage, falls dies aus bestimmten Gründen vorteilhaft ist.

Vorzugsweise liegt der zwischen dem Dichtabschnitt der Dichtlippe des unverbauten Radialwellendichtrings und der Welle gebildete Winkel α zwischen 30° und 70° und beträgt weiter vorzugsweise mindestens 40°. Dieser im Verhältnis zu einer Elastomerdichtlippe relativ steile Anstellwinkel trägt zu einer ausreichenden Anpresskraft auch bei starker Quellung der Dichtlippe bei.

Vorzugsweise weist die Dichtlippe zwischen ihrer Anbindung an den Stützkörper und dem Dichtabschnitt einen mit einem relativ kleinen Radius gebogenen Abschnitt auf. Relativ klein bezieht sich dabei auf den Radius einer konventionellen, einfach gebogenen Manschetten-Dichtlippe, die über den gesamten Bereich zwischen dem Kontaktabschnitt mit der Welle und der Anbindung an das Stützelement mit einem im Wesentlichen einheitlichen Radius gebogen ist. Insbesondere ist der relativ kleine Biegeradius im Rahmen der vorliegenden Erfindung vorzugsweise höchstens zwei Drittel, weiter vorzugsweise höchstens halb so groß wie der Radius einer konventionellen Manschetten-Dichtlippe. Der mit relativ kleinem Radius gebogene Abschnitt der Dichtlippe ist vorzugsweise mit einem Abstand d größer als Null von der Welle angeordnet. Eine unerwünschte Kontaktierung der Welle im Bereich des gebogenen Dichtlippenabschnitts, und daraus resultierender vorzeitiger Verschleiß, kann dann trotz erheblicher Quellung der Dichtlippe vermieden werden. Vorteilhafterweise beträgt der Abstand d zwischen dem mit relativ kleinem Radius gebogenen Abschnitt von der Welle mindestens 50%, weiter vorzugsweise mindestens 100% der halben Dicke b der Dichtlippe. In diesem Fall führt auch eine sehr starke Quellung der Dichtlippe um bis zu 100% des normalen Volumens und mehr nicht zu einer Kontaktierung der Welle im Bereich des gebogenen Dichtlippenabschnitts.

Vorzugsweise weist die Dichtlippe zwischen der Anbindung an den Stützkörper und dem Dichtabschnitt einen gegenläufig gebogenen, insbesondere in den Dichtabschnitt übergehenden Abschnitt auf. Gegenläufig gebogen bedeutet dabei, dass die Krümmung des betreffenden Abschnitts der Krümmung der Dichtlippe insgesamt entgegengesetzt ist. Der gegenläufig gebogene Abschnitt ermöglicht insbesondere den bereits erwähnten vorteilhaften, relativ großen Anstellwinkel der Dichtlippe in die Welle. Insbesondere aufgrund des gegenläufig gebogenen Abschnitts ergibt sich eine bevorzugte Schwanenhalsform oder S-Form der Dichtlippe insgesamt. Die Schwanenhalsform der Dichtlippe hat sich als eine bevorzugte Formung erwiesen, um unabhängig vom Maß der Quellung, innerhalb in der Praxis auftretender Grenzen, eine ausreichende, aber nicht zu hohe Anpresskraft der Dichtlippe an die Welle zu erzielen.

Vorzugsweise beträgt die Dicke b des Dichtabschnitts mindestens 0.9 mm, um eine ausreichende Formstabilität trotz der insbesondere durch Quellung ausgeübten Druckspannungen sicherzustellen.

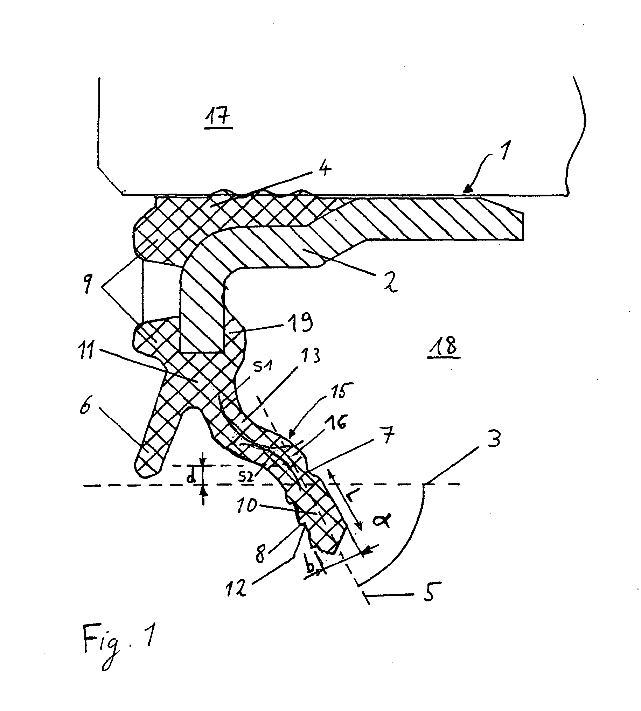

Die Erfindung wird im Folgenden anhand eines vorteilhaften Ausführungsbeispiels unter Bezugnahme auf die beigefügte Figur erläutert. Dabei zeigt
- Fig. 1:: einen Teilquerschnitt durch einen Radialwellendichtring gemäß der Erfindung.

Der Radialwellendichtring 1 zur Abdichtung der gestrichelt dargestellten Welle 3, die durch ein Gehäuseteil 17 eines Kraftfahrzeugmotors oder Getriebes geführt ist, ist in Fig. 1 im unverbauten Zustand gezeigt. Der Dichtring 1 umfasst einen ringförmigen Stützkörper 2 insbesondere aus Metall oder plastischem Kunststoff und ein daran direkt anvulkanisiertes Dichtelement 11 mit einer Dichtlippe 15. Die Dichtlippe 15 umfasst einen Dichtabschnitt 10, der im verbauten Zustand in einem Kontaktbereich 8 über eine axiale Länge L flächig auf der Welle aufliegt. Die Dichtlippe 15 weist eine ausreichende Biegeelastizität auf, um ohne zusätzliche Hilfsmittel, insbesondere ohne eine konventionelle Ringspiralfeder, einen für die Dichtwirkung ausreichenden Anpressdruck des Dichtabschnitts 10 zu erzielen. Die Dichtlippe 15 umfasst weiterhin auf der der Welle 3 zugewandten Seite einen oder mehrere Rückförderkanäle 12 zur dynamischen Rückförderung von austretendem Öl bzw. Medium in den abzudichtenden Raum 18. Der Rückförderkanal 12 kann insbesondere spiralförmig oder abschnittweise spiralförmig wie in der DE 100 33 446 C2 oder wellenförmig in sich geschlossen wie in der DE 101 54 789 B4 sein. Die zuvor geschilderte Bauform wird im Rahmen der vorliegenden Anmeldung als Manschettendichtlippe bezeichnet. Die die Welle kontaktierende axiale Länge L des Dichtabschnitts 10 beträgt vorzugsweise mindestens 0.5 mm. Um Trockenlauf und vorzeitigen Verschleiß zu vermeiden und die Reibmomente zu reduzieren, beträgt die kontaktierende axiale Länge L des Dichtabschnitts 10 vorzugsweise höchstens 3 mm, weiter vorzugsweise höchstens 2 mm.

Das Dichtelement 11 ist aus einem hochtemperaturvernetzten Silikonmaterial gefertigt. Der Begriff Silikonmaterial umfasst beispielsweise MVQ, FMVQ, LSR, fluoriertes LSR, ohne hierauf beschränkt zu sein. Die folgende Beschreibung geht von einem bevorzugten LSR (Liquid Silicone Rubber) Flüssigsilikon-Material 9 aus. Als Ausgangsmaterial wird ein niedrigviskoser Silikonkautschuk verwendet, der hauptsächlich, beispielsweise 60% bis 80%, Silikone bzw. Poly(organo)siloxane mit Vinylgruppen für die Vernetzungsreaktion und des Weiteren beispielsweise 20% bis 40% verstärkende Zusatzstoffe zum Einstellen der gewünschten mechanischen Eigenschaften sowie Additive, beispielsweise Platin, insbesondere zum Katalysieren der Vernetzungsreaktion enthält. Der insbesondere als Zweikomponentensystem vorliegende HTV (hochtemperaturvernetzende) Flüssigsilikonkautschuk wird vorzugsweise mittels Additionsvernetzung polymerisiert, d.h. durch Addition von Si-H-Gruppen an siliziumgebundene Vinylgruppen. Die Flüssigsilikonkautschuk-Komponenten weisen eine ausreichend niedrige Viskosität auf, um in einer Spritzgießmaschine verarbeitet werden zu können.

Um die Verarbeitungszeit bis zum Beginn der Vernetzung einzustellen, enthält eine der beiden Komponenten vorzugsweise einen Inhibitor (Topfzeitregler). Der anderen Komponente ist vorzugsweise ein Katalysator, insbesondere eine Edelmetallverbindung, beigefügt. Die beiden Flüssigsilikon-Komponenten werden in ein Werkzeug eingespritzt, in das der Stützkörper 2 eingelegt ist. Die Vernetzung startet durch den Einfluss der Werkzeugtemperatur, die mehr als 100°C, vorzugsweise mehr als 150°C beträgt und insbesondere je nach verwendetem Silikonkautschuk im Bereich zwischen 160°C und 220°C liegt. Bei diesen Temperaturen verläuft die Vernetzungsreaktion mit etwa 5 s pro mm Wandstärke sehr schnell, so dass wesentlich kürzere Zykluszeiten als beispielsweise mit klassischen Elastomeren erzielt werden können.

Die Mittelachse 5 des Dichtabschnitts 10 bildet im unverbauten Zustand einen Anstellwinkel α gegen die Welle 3, der vorzugsweise mindestens 30°, weiter vorzugsweise mindestens 40°, noch weiter vorzugsweise mindestens 50°, beispielsweise etwa 60° beträgt. Dieser im Verhältnis zu einer konventionellen Elastomer-Manschettendichtlippe steile Anstellwinkel α trägt zu einer ausreichenden Anpressung des Dichtabschnitts 10 an die Welle 3 auch bei erheblicher Quellung der Dichtlippe 15 bei. Der Anstellwinkel α beträgt vorzugweise weniger als 70°, um optimale Andruckverhältnisse zu erzielen. Die Dichtlippe 15 ist so dimensioniert, dass die auf den Umfang der Welle 3 bezogene Anpressung in einem Bereich von 0,2 N/cm bis 0,8 N/cm, vorzugsweise in einem Bereich von 0,3 N/cm bis 0,6 N/cm liegt.

An den Anbindungsbereich 19 anschließend weist die Dichtlippe 15 vorzugsweise einen mit einem relativ kleinen Radius gebogenen Abschnitt 13 auf. Diesem gebogenen Abschnitt 13 ist entlang der Mittelachse der Dichtlippe 15 ein Kreis S1 einbeschrieben, dessen Radius erheblich kleiner, vorzugsweise mindestens ein Drittel, weiter vorzugsweise mindestens 50% kleiner ist als der Radius einer konventionellen, einfach gebogenen Manschetten-Dichtlippe. Wenn man sich den gebogenen Abschnitt 13 entlang der Kreislinie S1 fortgesetzt denkt, ergibt sich der in Fig. 1 dargestellte Abstand d größer Null des gebogenen Abschnitts 13 zu der Welle 3. Aufgrund des Abstands d kommt die Dichtlippe 15 im Bereich zwischen der Anbindung 19 und dem Dichtabschnitt 10 auch im Falle einer erheblichen Volumenquellung der Dichtlippe 15 nicht zur unerwünschten Anlage an die Welle 3. Wenn der Abstand d vorzugsweise mehr als 50%, weiter vorzugsweise mehr als 100% der halben Dicke b der Dichtlippe 15 beträgt, gilt dies noch für sehr starke Volumenquellung bis zu 100% des ursprünglichen Volumens und mehr.

Die Dichtlippe 15 umfasst vorzugsweise einen mit einem relativ kleinen Radius gebogenen Abschnitt 16, der insbesondere in den Dichtabschnitt 10 übergeht. Diesem gebogenen Abschnitt 16 ist entlang der Mittelachse der Dichtlippe 15 ein Kreis S2 einbeschrieben, dessen Radius erheblich kleiner, vorzugsweise mindestens 50% kleiner ist als der Radius einer konventionellen, einfach gebogenen Manschetten-Dichtlippe. Der gebogene Abschnitt 16 weist insbesondere eine Krümmung auf, die der Krümmung der Dichtlippe 15, sowie gegebenenfalls des ersten gebogenen Abschnitts 13, entgegengesetzt ist. Die entgegengesetzte Krümmung des gebogenen Abschnitts 16 trägt zu einer ausreichenden Anpressung des Dichtabschnitts 10 an die Welle 3 auch bei erheblicher Quellung der Dichtlippe 15 bei.

Wie aus Fig. 1 ersichtlich ist, weist die Dichtlippe 15 insgesamt eine Schwanenhalsform auf. Diese hat sich als eine bevorzugte Formung erwiesen, um unabhängig vom Maß der Quellung, innerhalb in der Praxis auftretender Grenzen, eine ausreichende, aber nicht zu hohe Anpresskraft der Dichtlippe an die Welle zu erzielen.

Auf der der Welle 3 abgewandten Seite der Dichtlippe 15 ist vorzugsweise zwischen dem Dichtabschnitt 10 und dem Übergangsabschnitt 13, 16 vorteilhafterweise eine umlaufende nutförmige Ausnehmung 7 vorgesehen, die die Dichtwirkung negativ beeinflussende Querkontraktionen der Dichtlippe 15 entgegenwirkt und die Flexibilität verbessert.

Die Dicke d des Dichtabschnitts 10 beträgt im Hinblick auf eine mögliche erhebliche Volumenquellung mindestens 0.9 mm, um eine ausreichende Formstabilität trotz der insbesondere durch Quellung ausgeübten Druckspannungen sicherzustellen, und liegt vorteilhafterweise im Bereich von 0.9 mm bis 1.2 mm.

Eine auf der Umgebungsseite 20 angeordnete Schutzlippe 6 zum Schutz vor Schmutz- und Staubpartikeln ist vorzugsweise einstückig mit dem Dichtelement 11 gebildet. Ein an den Stützkörper 2 angebundenes statisches Dichtelement 4, hier in der Form eines Außenmantels, zur Abdichtung des Dichtrings 1 gegen das Gehäuseteil 17 ist vorzugsweise ebenfalls aus dem Flüssigsilikon-Material 9 gefertigt. Vorteilhafterweise können sämtliche aus Flüssigsilikon-Material 9 bestehenden Teile 4, 6, 11 in einem Arbeitsschritt an den Stützkörper 2 angeformt werden.

## Patentansprüche

1. Radialwellendichtring zur Abdichtung eines Gehäuseteils eines Kraftfahrzeugmotors oder -getriebes, mit einem Stützkörper (2) und einer mit dem Stützkörper (2) verbundenen, zur abzudichtenden Seite hin gebogenen Manschetten-Dichtlippe (15), die im eingebauten Zustand auf einer axialen Länge L auf der Welle (3) aufliegt und im Kontaktbereich mit der Welle (3) einen Rückförderkanal (12) zum Rückfördern von Medium in den abzudichtenden Raum (18) aufweist und die eine ausreichende Biegeelastizität aufweist, um im eingebauten Zustand ohne zusätzliche Hilfsmittel einen für die Dichtwirkung ausreichenden Anpressdruck zu erzielen, **dadurch gekennzeichnet, dass** die Dichtlippe (15) im Wesentlichen aus einem hochtemperaturvernetzten LSR Flüssigsilikon-Material (9) besteht.

2. Radialwellendichtring nach einem der vorangegangenen Ansprüche, wobei das Silikonmaterial durch Einspritzen von niedrigviskosem Silikonkautschuk bei hoher Temperatur in ein Werkzeug gefertigt ist.

3. Radialwellendichtring nach einem der vorangegangenen Ansprüche, wobei das Silikonmaterial (9) additionsvernetzt ist.

4. Radialwellendichtring nach einem der vorangegangenen Ansprüche, wobei das Silikonmaterial (9) peroxidvernetzt ist.

5. Radialwellendichtring nach einem der vorangegangenen Ansprüche, wobei der zwischen einem Dichtabschnitt (10) der Dichtlippe (15) des unverbauten Radialwellendichtrings (1) und der Welle (3) gebildete Winkel α zwischen 30° und 70° liegt.

6. Radialwellendichtring nach einem der vorangegangenen Ansprüche, wobei die Dichtlippe (15) zwischen der Anbindung an den Stützkörper (2) und dem Dichtabschnitt (10) einen mit einem relativ kleinen Radius (S1) gebogenen Abschnitt (13) aufweist.

7. Radialwellendichtring nach Anspruch 6, wobei der Radius (S1) so klein ist, dass ein dem gebogenen Abschnitt (13) eingeschriebener Kreis einen Abstand d zur Welle aufweist.

8. Radialwellendichtring nach einem der vorangegangenen Ansprüche, wobei die Dichtlippe (15) zwischen der Anbindung an den Stützkörper (2) und dem Dichtabschnitt (10) einen gegenläufig gebogenen Abschnitt (16) aufweist.

9. Radialwellendichtring nach einem der vorangegangenen Ansprüche, wobei die Dichtlippe (15) insgesamt eine Schwanenhalsform aufweist.

10. Radialwellendichtring nach einem der vorangegangenen Ansprüche, wobei die Dicke b des Dichtabschnitts (10) größer als 0,9 mm ist.

11. Verwendung eines Radialwellendichtrings nach einem der vorangegangenen Ansprüche zur Abdichtung eines Gehäuseteils eines Kraftfahrzeugmotors oder -getriebes.

12. Verfahren zur Herstellung eines Radialwellendichtrings (1) mit einem Stützkörper (2) und einer mit dem Stützkörper (2) verbundenen, zur abzudichtenden Seite hin gewölbten Manschetten-Dichtlippe (15), die im eingebauten Zustand auf einer axialen Länge L tangential an der Welle anliegt und im Kontaktbereich mit der Welle (3) einen Rückförderkanal (12) zum Rückfördern von Medium in den abzudichtenden Raum (18) aufweist und die eine ausreichende Biegeelastizität aufweist, um im eingebauten Zustand ohne zusätzliche Hilfsmittel einen für die Dichtwirkung ausreichenden Anpressdruck zu erzielen, **dadurch gekennzeichnet, dass** zum Anformen der Dichtlippe (15) an den Stützkörper ein aus einem hochtemperaturvernetzten LSR Flüssigsilikon-Material (9) bei hoher Temperatur in ein den Stützkörper (2) enthaltendes Werkzeug gespritzt wird.

## Claims

1. Radial shaft sealing ring for sealing of a casing part of a motor vehicle engine or gearbox, with a supporting body (2) and a sleeve-type sealing lip (15) connected to the supporting body (2) and bent towards the side to be sealed, which sealing lip in the mounted state lies on an axial length L on the shaft (3) and has a conveying groove (12) in the area of contact with the shaft (3) for conveying of medium back into the volume (18) to be sealed, and which sealing lip has a sufficient bending elasticity to achieve a contact pressure in the mounted state that is sufficient for the sealing effect without the use of additional means, **characterized in that** the material of the sealing lip (15) essentially consists of a high temperature cross-linked LSR liquid silicone material (9).

2. Radial shaft sealing ring according to any one of the preceding claims, wherein the silicone material is fabricated by injecting silicone caoutchouc of low viscosity at high temperatures into a tool.

3. Radial shaft sealing ring according to any one of the preceding claims, wherein the silicone material (9) is addition cross linked.

4. Radial shaft sealing ring according to any one of the preceding claims, wherein the silicone material (9) is peroxide cross linked.

5. Radial shaft sealing ring according to any one of the preceding claims, wherein the angle α between a sealing section (10) of the sealing lip (15) of the unmounted radial shaft sealing ring (1) and the shaft (3) lies between 30° and 70°.

6. Radial shaft sealing ring according to any one of the preceding claims, wherein the sealing lip (15) comprises between the connection to the supporting body (2) and the sealing section (10) a bent section (13) bent by a relatively small radius (S1).

7. Radial shaft sealing ring according to claim 6, wherein the radius (S1) is so small that a circle inscribed in the bent section (13) has a distance d to the shaft.

8. Radial shaft sealing ring according to any one of the preceding claims, wherein the sealing lip (15) has a counter bent section (16) between the connection to the supporting body (2) and the sealing section (10).

9. Radial shaft sealing ring according to any one of the preceding claims, wherein the sealing lip (15) as a whole is swan neck shaped.

10. Radial shaft sealing ring according to any one of the preceding claims, wherein the thickness b of the sealing section (10) is greater than 0.9 mm.

11. Application of a radial shaft sealing ring according to any one of the preceding claims for sealing of a casing part of a motor vehicle engine or gearbox.

12. Method of fabricating a radial shaft sealing ring (1) with a supporting body (2) and a sleeve-type sealing lip (15) connected to the supporting body (2) and bent towards the side to be sealed, which sealing lip in the mounted state lies on an axial length L tangentially on the shaft and has a conveying groove (12) in the area of contact with the shaft (3) for conveying of medium back into the volume (18) to be sealed, and which sealing lip has a sufficient bending elasticity to achieve a contact pressure in the mounted state that is sufficient for the sealing effect without the use of additional means, **characterized in that** for vulcanizing the sealing lip (15) to the supporting body, a high temperature cross-linked LSR liquid silicone material (9) is injected at high temperatures into a tool containing the supporting body (2).

## Revendications

1. Joint d'étanchéité d'arbre radial pour l'étanchéification d'une partie carter d'un moteur ou d'un mécanisme de transmission d'un véhicule automobile, comportant un corps de support (2) et une lèvre d'étanchéité en forme de manchon (15) reliée au corps de support (2) pliée en direction de la face devant être étanchéifiée, qui, à l'état monté, repose sur une longueur axiale L sur l'arbre (3) et présente dans la zone de contact avec l'arbre (3) un canal de refoulement (12) pour refouler un milieu dans l'espace devant être étanchéifié (18) et qui présente une élasticité en flexion suffisante pour atteindre à l'état monté sans aide auxiliaire une pression d'appui suffisante pour l'action d'étanchéité, **caractérisé par le fait que** la lèvre d'étanchéité (15) est constituée essentiellement d'un matériau élastomère silicone liquide vulcanisé à haute température (9).

2. Joint d'étanchéité d'arbre radial selon l'une des revendications précédentes, dans lequel le matériau silicone est fabriqué par injection de caoutchouc de silicone à faible viscosité à haute température dans un outil.

3. Joint d'étanchéité d'arbre radial selon l'une des revendications précédentes, dans lequel le matériau silicone (9) est réticulé par addition.

4. Joint d'étanchéité d'arbre radial selon l'une des revendications précédentes, dans lequel le matériau silicone (9) est réticulé au peroxyde.

5. Joint d'étanchéité d'arbre radial selon l'une des revendications précédentes, dans lequel l'angle α formé entre une section d'étanchéité (10) de la lèvre d'étanchéité (15) du joint d'étanchéité d'arbre radial (1) non monté et l'arbre (3) se situe entre 30° et 70°.

6. Joint d'étanchéité d'arbre radial selon l'une des revendications précédentes, dans lequel la lèvre d'étanchéité (15) présente entre la connexion au corps de support (2) et la section d'étanchéité (10) une section pliée (13) avec un rayon relativement petit (S1).

7. Joint d'étanchéité d'arbre radial selon la revendication 6, dans lequel le rayon (S1) est si petit qu'un cercle inscrit dans la section pliée (13) présente une distance d par rapport à l'arbre.

8. Joint d'étanchéité d'arbre radial selon l'une des revendications précédentes, dans lequel la lèvre d'étanchéité (15) présente entre la connexion au corps de support (2) et la section d'étanchéité (10) une section pliée dans le sens opposé (16).

9. Joint d'étanchéité d'arbre radial selon l'une des revendications précédentes, dans lequel la lèvre d'étanchéité (15) présente globalement une forme de col de cygne.

10. Joint d'étanchéité d'arbre radial selon l'une des revendications précédentes, dans lequel l'épaisseur b de la section d'étanchéité (10) est supérieure à 0,9 mm.

11. Utilisation d'un joint d'étanchéité d'arbre radial selon l'une des revendications précédentes, pour l'étanchéification d'une partie carter d'un moteur ou d'un mécanisme de transmission d'un véhicule automobile.

12. Procédé de fabrication d'un joint d'étanchéité d'arbre radial (1) comportant un corps de support (2) et une lèvre d'étanchéité en forme de manchon (15) reliée au corps de support (2) incurvée en direction de la face devant être étanchéifiée, qui, à l'état monté, s'appuie sur une longueur axiale L de manière pratiquement tangentielle à l'arbre et présente dans la zone de contact avec l'arbre (3) un canal de refoulement (12) pour refouler un milieu dans l'espace devant être étanchéifié (18) et qui présente une élasticité en flexion suffisante pour atteindre à l'état monté sans aide auxiliaire une pression d'appui suffisante pour l'action d'étanchéité, **caractérisé par le fait que**, pour le moulage de la lèvre d'étanchéité (15) sur le corps de support, un matériau élastomère silicone liquide vulcanisé à haute température (9) est injecté à haute température dans un outil contenant le corps de support (2).
